# EUROPEAN PATENT APPLICATION

(11) **EP 4 819 277 A1**
(43) Date of publication of application: **07.10.2026**
(21) Application number: 24897876.9
(22) Date of filing: 16.10.2024
(51) Int. Cl.: H01M 10/0562, H01M 10/0585, H01M 4/587, H01M 4/38

(54) **SOLID ELECTROLYTE FOR ALL SOLID-STATE BATTERY AND ALL SOLID-STATE BATTERY INCLUDING SAME**

(30) Priority: 30.11.2023 KR 20230171537
(71) Applicant: SAMSUNG SDI CO., LTD., Yongin-si, Gyeonggi-do 17084 (KR)
(72) Inventor: LEE, Kyulin, Yongin-si, Gyeonggi-do 17084 (KR); SONG, Jayhyok, Yongin-si, Gyeonggi-do 17084 (KR); HAN, Jungmin, Yongin-si, Gyeonggi-do 17084 (KR); KIM, Jinkyu, Yongin-si, Gyeonggi-do 17084 (KR)
(74) Representative: Michalski Hüttermann & Partner mbB
(86) International application number: PCT/KR2024/015692
(87) International publication number: WO 2025/116278

(57) **Abstract**

The present invention relates a solid electrolyte for an all solid-state battery and an all solid-state battery including same, wherein the solid electrolyte for an all solid-state battery comprises a Zr element in an amount of 100 ppm to 1,000 ppm; and comprises an argyrodite-based compound.

## Description

### TECHNICAL FIELD

Embodiments relate to a solid electrolyte for an all solid-state battery and an all solid-state battery including the same.

### BACKGROUND ART

Recently, there has been a rapid progress in electric devices using batteries, e.g., mobile phones, laptop computers, and electric vehicles.

As such a battery, the development for an all solid-state battery, which uses lithium metal as the negative electrode, has progressed. An all solid-state battery refers to a battery in which all materials are solids, e.g., a battery using a solid electrolyte. The all solid-state battery may be structurally strong because an electrolyte is solid, and thus, there may be a low risk of fire or explosion caused the electrolyte leakage due to external impact, or the like. Furthermore, the all solid-state battery may be formed in various shapes, so that it may be useful in variety of fields.

### DETAILED DESCRIPTION OF THE INVENTION

### TECHNICAL PROBLEM

One embodiment provides a solid electrolyte for an all solid-state battery exhibiting excellent ionic conductivity.

Another embodiment provides an all solid-state battery including the solid electrolyte.

### TECHNICAL SOLUTION

The embodiments may be realized by providing a solid electrolyte for an all solid-state battery, the solid electrolyte including a Zr element in an amount of 100 ppm to 1,000 ppm; and an argyrodite-based compound.

Another embodiment provides an all solid-state battery including a negative electrode; a positive electrode; and a solid electrolyte layer between the positive electrode and the negative electrode, and including the solid electrolyte.

### ADVANTAGEOUS EFFECTS

A solid electrolyte for an all solid-state battery according to one embodiment may exhibit excellent ionic conductivity and may provide an all solid-state battery exhibiting excellent performances.

### DESCRIPTION OF THE DRAWINGS

FIG. 1 is a schematic diagram showing the all solid-state battery according to one embodiment.
FIG. 2 is a schematic diagram showing the all solid-state battery according to another embodiment.

### BEST MODE FOR PERFORMING INVENTION

Example embodiments will now be described more fully hereinafter with reference to the accompanying drawings. However, they may be embodied in different forms and should not be construed as limited to the embodiments set forth herein.

Terms used in the specification is used to explain embodiments, and are not intended to be limiting. Expressions in the singular include expressions in plural unless the context clearly dictates otherwise.

The term "combination thereof" may include a mixture, a laminate, a complex, a copolymer, an alloy, a blend, a reactant of constituents.

The terms "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned with inherent preparation and material permissible errors when presented, and are used in the sense of being close to or near that value, and they are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

In the present invention, "particle size" or "a particle diameter", may be an average particle diameter. Furthermore, unless otherwise defined in the specification, the average particle diameter may be defined as an average particle diameter D50 indicating the diameter of particles having a cumulative volume of 50 volume % in the particle size distribution. The particle size may be measured by a method well known to those skilled in the art, for example, by a particle size analyzer, or by a transmission electron microscopic image, a scanning electron microscopic image), or a field emission scanning electron microscopy (FE-SEM). In another embodiments, a dynamic light-scattering measurement device is used to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle distribution in the measuring device. Alternatively, the average particle diameter may be taken the diameter (D50) of the particles with a cumulative volume of 50 volume% as the average particle diameter from a particle size distribution which is obtained by randomly measuring the size (diameter or length of long axis) of approximately 20 particles in the scanning electron microscope image.

The term "thickness" may be measured through a photograph taken with an optical microscope such as a scanning electron microscope.

One embodiment provides a solid electrolyte for an all solid-state battery including a zirconium (Zr) element and an argyrodite-based compound, and in an implementation, the Zr element is included in an amount of 100 ppm to 1,000 ppm (e.g., by weight).

In an implementation, the argyrodite-based compound may be represented by Chemical Formula 1.

[Chemical Formula 1] LiₐM_{b}S_{c}P_{d}Xₑ

In Chemical Formula 1, a, b, c, d, and e may each independently be 0 or more and 12 or less. In an implementation, a may be 4 to 8, or 5 to 7. In an implementation, b may be 0 to 0.5, or 0 to 0.3. In an implementation, c may be 4 to 6, or 4 to 5. In an implementation, d may be 0.1 to 2, or 0.2 to 1.9. In an implementation, e may be 0.1 to 2, or 0.1 to 1.9.

M may be, Ge, Sn, Si, Ag, Cu, or a combination thereof, or may be Cu, Sn, or a combination thereof.

X may be F, CI, Br, or I, or may be CI, Br, or a combination thereof.

In an implementation, the argyrodite-based compound may include, e.g., Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof.

In an implementation, the solid electrolyte may include the Zr element at an amount of 100 ppm to 1,000 ppm, 100 ppm to 700 ppm, or 100 ppm to 600 ppm. In an implementation, the Zr element may not be present in a doped form in the argyrodite-based compound, and thus Zr is not included in Chemical Formula 1. In an implementation, the inclusion of the Zr element in the solid electrolyte represents that the Zr element is present on the surface of the argyrodite-based compound, or in a mixed state.

In an implementation, the Zr element may be included in a form of a Zr metal, a Zr alloy, Li₂O-ZrO₂, Li₂ZrO₃, or a combination thereof. In an implementation, the argyrodite-based compound according to some embodiments may be mixed with Zr particles (Zr metal particles) or a Zr alloy, or may be mixed with a Zr-containing compound, to form a solid electrolyte. The Zr alloy may be an alloy of the Zr metal, and another metal, and in an implementation, the other metal may be a suitable metal that may prepare an alloy with Zr and may be applied to the solid electrolyte of the all solid-state battery.

In some embodiments, an ionic conductivity of the solid electrolyte at room temperature, e.g., a temperature of 20 °C to 27 °C, may be 1 mS/cm to 10 mS/cm, or 1 mS/cm to 9 mS/cm. Such a high ionic conductivity of the solid electrolyte according to some embodiments may allow to exhibit excellent battery characteristics.

In an implementation, the solid electrolyte according to one embodiment may have an average particle diameter (D50) of 0.5 µm to 5 µm, 0.5 µm to 4 µm, 1 µm to 4 µm, or 1 µm to 3.5 µm.

The solid electrolyte may be prepared by the following procedures.

An argyrodite-based compound represented by Chemical Formula 1 may be mixed with zirconia. An amount of the zirconia may be, based on a total weight of the argyrodite-based compound, 0.001 wt% to 50 wt%, 0.01 wt% to 10 wt%, 0.01 wt% to 5 wt%, 0.01 wt% to 3 wt%, 0.01 wt% to 1 wt%, or 0.01 wt% to 0.1 wt%.

The obtained mixture may be sintered.

The sintering may be carried out at a temperature of 300 °C to 700 °C, or 400 °C to 600 °C. The sintering may be carried out for 1 hour to 24 hours, or 3 hours to 20 hours.

Thereafter, the sintered product may be pulverized to prepare a solid electrolyte.

The pulverization may be carried out at a rotating speed of 100 rpm to 800 rpm, 100 rpm to 700 rpm, or 120 rpm to 700 rpm. The pulverization may be performed for a sufficient time such that the average particle diameter (D50) of the pulverized product is to be 0.5 µm to 5 µm. In an implementation, it may be carried out for 1 hour to 24 hours.

The solid electrolyte prepared according to some embodiments may include a Zr element in an amount of 100 ppm to 1,000 ppm, and an argyrodite-based compound.

Hereinafter, the configurations of the solid electrolyte layer will be escribed.

### <Solid electrolyte layer>

The solid electrolyte layer may include the solid electrolyte according to some embodiments.

In an implementation, the solid electrolyte layer may further include a binder. The binder may be a styrene butadiene rubber, polytetrafluoroethylene, polyvinylidene fluoride, polyethylene, an acrylate polymer, or a combination thereof, or other suitable material. The acrylate polymer may include butyl acrylate, polyacrylate, polymethacrylate, or a combination thereof.

The solid electrolyte layer may be prepared by adding a solid electrolyte according to some embodiments to a binder solution, coating it on a substrate film, and drying it. The binder solution may include isobutyl isobutylate, xylene, toluene, benzene, hexane, or a combination thereof, as a solvent. The solid electrolyte layer preparation is widely known in the art, so a detailed description thereof will be omitted in the specification.

A thickness of the solid electrolyte layer may be, e.g., 10 µm to 150 µm.

In an implementation, the solid electrolyte layer may further include an alkali metal salt, an ionic liquid, or a conductive polymer.

The alkali metal salt may be, e.g., a lithium salt. In the solid electrolyte layer, a concentration of the lithium salt may be 1 M or more, e.g., 1 M to 4 M. In this case, the lithium salt may help improve the lithium ion mobility of the solid electrolyte layer, thereby improving ionic conductivity.

The lithium salt may include, e.g., LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoro methanesulfonyl)imide (LiTFSI), LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

The lithium salt may include an imide salt, e.g., lithium bis(trifluoro methanesulfonyl)imide, LiTFSI, LiN(SO₂CF₃)₂), or lithium bis(fluorosulfonyl)imide(LiFSI, LiN(SO₂F)₂). The lithium salt may suitably maintain the chemical reactivity with the ionic liquid, and thus, the ionic conductivity may be maintained or improved.

The ionic liquid may have a melting point of a room temperature or less which may be a liquid state at a room temperature and salts consisting of only ion, or a room-temperature molten salt.

The ionic liquid may be a compound including a) a cation, e.g., ammonium, pyrrolidinium, pyridinium, pyrrimidinium, imidazolium, piperridinium, pyrazolium, oxazolium, pyridazinium, phosphonium, sulfonium, triazolium, or a mixture thereof, and b) an anion, e.g., BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, FSO₂₂N⁻, (C₂F₅SO₂)₂N⁻, (C₂F₅SO₂, CF₃SO₂)N⁻, or (CF₃SO₂)₂N⁻.

The ionic liquid may include, e.g., N-methyl-N-propylpyrroledinium bis(trifluoromethanesulfonyl)imide, N-butyl-N-methylpyrroleridium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, a weight ratio of the solid electrolyte and the ionic liquid may be 0.1:99.9 to 90:10, e.g., 10:90 to 90:10, 20:80 to 90:10, 30:70 to 90:10, 40:60 to 90:10, or 50:50 to 90:10. The solid electrolyte layer within the ranges may have an improved electrochemical contact area to the electrode, and thus, the ionic conductivity may be maintained or improved. This may lead to improvements in the energy density, discharge capacity, rate capability, or the like of the all solid-state battery.

### [All solid-state battery]

Another embodiment may provide an all solid-state battery including the solid electrolyte. The all solid-state battery may include a positive electrode, a negative electrode, and a solid electrolyte layer between the positive electrode and the negative electrode. The solid electrolyte layer may include the solid electrolyte according to some embodiments.

### <Positive electrode>

The positive electrode may include a positive current collector and a positive electrode active material layer on the positive current collector.

The positive electrode active material layer may include a positive electrode active material and a sulfide solid electrolyte. The positive electrode active material layer may further include a binder and a conductive material.

The positive electrode active material may include compounds that reversibly intercalate and deintercalate lithium ions.

The positive electrode active material may include compounds that reversibly intercalate and deintercalate lithium ions. In an implementation, it may include one or more composite oxides of a metal, e.g., cobalt, manganese, nickel, or a combination thereof, and lithium. In an implementation, the positive electrode active material may include, e.g., LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas, A may be Ni, Co, Mn, or a combination thereof; B¹ may be Al, Ni, Co, Mn, Cr, Fe, Mg, Sr, V, a rare earth element, or a combination thereof; D¹ may be O, F, S, P, or combination thereof; E may be Co, Mn, or combination thereof; F¹ may be F, S, P, or a combination thereof; G may be Al, Cr, Mn, Fe, Mg, La, Ce, Sr, V, or a combination thereof; Q may be Ti, Mo, Mn, or a combination thereof; I¹ may be Cr, V, Fe, Sc, Y, or a combination thereof; J may be V, Cr, Mn, Co, Ni, Cu, or a combination thereof; and L¹ may be Mn, Al, or a combination thereof.

The compounds may have a coating layer on the surface, or may be mixed with another compound having a coating layer. The coating layer may include a coating element compound, e.g., an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof.

The coating layer may include suitable coating materials for the positive electrode active material of the all solid battery, e.g., Li₂O-ZrO₂ (LZO), or the like.

In an implementation, the positive electrode active material may include three-components including nickel, cobalt, and manganese, or nickel, cobalt, and aluminum, the capacity density of the all solid-state battery may be further improved, and the metal elution from the positive electrode active material at charged state may be further reduced. This may render to further improve long reliability and cycle characteristics of the all solid-state battery at charged state.

The shape of the positive electrode active material may be, a spherical shape, ellipsoids, a shape close to spherical, or a particle shape such as polyhedron, or unspecified shape, or the like.

The average particle diameter of the positive electrode active material may be a suitable range for a positive electrode active material of an all solid-state secondary battery. In an implementation, the average particle diameter of the positive electrode active material may be 1 µm to 25 µm, e.g., 4 µm to 25 µm, 5 µm to 20 µm, 8 µm to 20 µm, or 10 µm to 18 µm. The positive electrode active material with a particle diameter within these ranges may be harmoniously mixed with other components in the positive electrode active material layer and may achieve high capacity and high energy density.

The positive electrode active material may be secondary particle where a plurality of primary particles is agglomerated, or monocrystalline (single crystal).

In the positive electrode active material layer, an amount of the positive electrode active material may be, based on the total weight of the positive electrode active material layer, 55 wt% to 99.7 wt%, or 74 wt% to 89.8 wt%. Including the positive electrode active material within these ranges may help ensure that a capacity of the all solid-state battery may be maximized and the cycle-life characteristics may be more enhanced.

In an implementation, the sulfide solid electrolyte may include, e.g., Li₂S-P₂S₅, Li₂S-P₂S₅-LiX (where X is an halogen element, e.g., I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (where m and n are each an integer of 0 or more and 12 or less, Z is Ge, Zn, or Ga), Li₂S-GeS₂, Li₂S-SiS₂-Li₃PO₄, Li₂S-SiS₂-LiₚMO_{q} (where p and q are each an integer of 0 or more and 12 or less and M is P, Si, Ge, B, Al, Ga, or In), LiₐM_{b}P_{c}S_{d}Aₑ (where a, b, c, d, and e are each an integer of 0 or more and 12 or less, M is Ge, Sn, Si, or a combination thereof, and A is F, Cl, Br, or I). The sulfide solid electrolyte may include, e.g., Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2) or Li₇₋ₓPS₆₋ₓIₓ (0≤x≤2). In some embodiments, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In an implementation, the sulfide solid electrolyte may be an argyrodite-type sulfide solid electrolyte. The argyrodite-type sulfide solid electrolyte may include, e.g., LiₐM_{b}P_{c}S_{d}Aₑ (where a, b, c, d, and e are each an integer of 0 or more and 12 or less, M is Ge, Sn, Si, or a combination thereof, and A is F, CI, Br, or I).

In an implementation, it may include, e.g., Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof.

The sulfide solid electrolyte may be amorphous, crystalline, or a combination thereof. The sulfide solid electrolyte may be prepared, e.g., by mixing Li₂S and P₂S₅ at a mole ratio of 50:50 to 90:10, or 50:50 to 80:20. Within these mixing ratios, the sulfide solid electrolyte exhibiting excellent ionic conductivity may be prepared. As other components, SiS₂, GeS₂, B₂S₃, or the like may be further included thereto, thereby further improving ionic conductivity.

The mixing procedure of the sulfur-containing source for preparing the sulfide solid electrolyte may be performed by a mechanical milling or a solution method. The mechanical milling may be performed by adding starting raw material, a ball mill, or the like in a reactor and vigorously stirring to pulverize the starting raw material and to mix them together. The solution method may provide a solid electrolyte as a precipitate by mixing starting raw material in a solvent. In an implementation, the heat treatment may be performed after mixing, the crystal of the solid electrolyte may be further solidified, and ionic conductivity may be further improved. In an implementation, the sulfide solid electrolyte may be prepared by mixing sulfur-containing raw materials and heat-treating them twice or more, which may provide a sulfide solid electrolyte with high ionic conductivity and rigidity.

The sulfide solid electrolyte may include a commercial solid electrolyte.

Based on the total weight of the positive electrode active material layer, an amount of the solid electrolyte may be 0.1 wt% to 35 wt%, e.g., 1 wt% to 35 wt%, 5 wt% to 30 wt%, 8 wt% to 25 wt%, or 10 wt% to 20 wt%. In the positive electrode active material layer, based on the total weight of the positive electrode active material and the solid electrolyte, 65 wt% to 99 wt% of the positive electrode active material and 1 wt% to 35 wt% of the solid electrolyte may be included, for example, 80 wt% to 90 wt% of the positive electrode active material and 10 wt% to 20 wt% of the solid electrolyte may be included. Maintaining the amount of the solid electrolyte in the positive electrode within the above amounts may help ensure that the efficiency and the cycle-life characteristic of the all solid-state battery may be enhanced, while the capacity may be not deteriorated.

The binder improves binding properties of positive electrode active material particles with one another and with a current collector. The binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like.

The binder may be included in an amount of 0.1 wt% to 5 wt%, or 0.1 wt% to 3 wt%, based on the total weight of the positive electrode active material layer. Within these ranges, the adhesion ability may be sufficiently secured without deteriorating the battery performance.

The conductive material may be included to provide electrode conductivity, and a suitable electrically conductive material that does not cause a chemical change may be used. Examples of the conductive material may include a carbon material such as natural graphite, artificial graphite, carbon black, acetylene black, ketjen black, carbon fiber, carbon nanofiber, carbon nanotube, or the like; a metal material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt%, based on the total weight of the positive electrode active material layer. Including the conductive material in the above amount ranges may help improve the electrical conductivity without deteriorating battery performance.

The positive electrode active material layer may have a thickness of 90 µm to 200 µm. In an implementation, a thickness of the positive electrode active material layer may be 90 µm or more, 100 µm or more, 110 µm or more, 120 µm or more, 130 µm or more, 140 µm or more, 150 µm or more, 160 µm or more, 170 µm or more, 180 µm or more, or 190 µm or more, and 200 µm or less, 190 µm or less, 180 µm or less, 170 µm or less, 160 µm or less, 150 µm or less, 140 µm or less, 130 µm or less, 120 µm or less, or 110 µm or less.

The positive current collector may include, e.g., indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

### <Negative electrode>

The negative electrode includes a current collector and a negative electrode layer on one surface of the current collector.

The negative electrode layer may include a negative electrode coating layer and the negative electrode coating layer may be a lithium electrodeposition induced layer or a negative catalyst layer.

In an implementation, the negative electrode layer may include the negative electrode coating layer, and the negative electrode may be a deposition-type negative electrode. The deposition-type negative electrode may not include a negative electrode active material in a preparation of the battery assembly, and lithium metal or the like may be deposited to serve it as the negative electrode active material during charging of the battery. To explain this in more detail, during charging an all solid-state battery, lithium ions may be released from a positive electrode active material and pass through the solid electrolyte to move to the negative electrode, and thus, it may be deposited on the negative current collector so that a lithium-containing layer, e.g., a lithium deposition layer between the current collector and a negative layer may be formed. The negative electrode with the lithium-containing layer may be referred to as a deposition-layer negative electrode.

In an implementation, the lithium-containing layer may be formed between the negative current collector and the negative electrode layer.

The charging may be a formation process which may be performed at 0.05 C to 1 C at 25 °C to 50 °C once to three times.

The lithium-containing layer may have a thickness of 10 µm to 50 µm. In an implementation, the thickness of the lithium-containing layer may be 10 µm or more, 20 µm or more, 30 µm or more, or 40 µm or more, and 50 µm or less, 40 µm less, 30 µm less, or 20 µm less. Maintaining the thickness of the lithium-containing layer within these ranges may help ensure that the lithium is reversibly deposited during charge and discharge, thereby further improving the cycle-life characteristics.

The negative electrode coating layer may include a metal, a carbon material, or combinations thereof, serving as a catalyst. In the negative electrode coating layer, e.g., a metal which may be supported on a carbonaceous material may be presented, or a metal mixed with a carbonaceous material may be present. In an implementation, the negative electrode coating layer may include the metal and the carbonaceous material.

The carbonaceous material, may be, e.g., crystalline carbon, amorphous carbon, or a combination thereof. In an implementation, the material may be amorphous carbon. The crystalline carbon may be, e.g., natural graphite, artificial graphite, mesophase carbon microbead, or a combination thereof.

The amorphous carbon may be, e.g., carbon black, acetylene black, denka black, ketjen black, furnace black, activated carbon, graphene, or combinations thereof. The carbon black may be Super P (available from Timcal, Ltd.). In an implementation, The amorphous carbon is not limited thereto, and a suitable material which may be classified as amorphous carbon may be used.

The amorphous carbon may be in the form of single particles, a secondary particle in which a plurality of primary particles are agglomerated, or combinations thereof.

The single particles may have a particle diameter of 10 nm to 60 µm. In an implementation, a particle diameter of the primary particles may be 20 nm to 100 nm, and a particle diameter of the secondary particle may be 1 µm to 20 µm.

In an implementation, a particle diameter of the primary particles may be 20 nm or more, 30 nm or more, 40 nm or more, 50 nm or more, 60 nm or more, 70 nm or more, 80 nm or more, or 90 nm or more, and 100 nm or less, 90 nm or less, 80 nm or less, 70 nm or less, 60 nm or less, 50 nm or less, 40 nm or less, or 30 nm or less.

In an implementation, a particle diameter of the secondary particle may be 1 µm or more, 3 µm or more, 5 µm or more, 7 µm or more, 10 µm or more, or 15 µm or more, and 20 µm or less, 15 µm or less, 10 µm or less, 7 µm or less, 5 µm or less, or 3 µm or less.

The shape of the primary particle may be spherical, oval, plate-shaped, or combinations thereof. In an implementation, the shape of the primary particle may be spherical, oval, or combinations thereof.

The metal may include, e.g., Ag, Zn, Al, Sn, Mg, Ge, Cu, In, Ni, Bi, Au, Si, Pt, Pd, or a combination thereof. In an implementation, the metal may be Ag. The inclusion of the metal in the negative electrode coating layer may help further improve the electrical conductivity of the negative electrode.

The metal may have or be a particle type and the metal particle may have a size of 5 nm to 800 nm. The size of the metal particle may be 5 nm or more, 50 nm or more, 100 nm or more, 150 nm or more, 200 nm or more, 250 nm or more, 300 nm or more, 350 nm or more, 400 nm or more, 450 nm or more, 500 nm or more, 550 nm or more, 600 nm or more, 650 nm or more, 700 nm or more, or 750 nm or more. The size of the metal particle may be 800 nm or less, 750 nm or less, 700 nm or less, 650 nm or less, 600 nm or less, 550 nm or less, 500 nm or less, 450 nm or less, 400 nm or less, 350 nm or less, 300nm or less, 250 nm or less, 200 nm or less, 150 nm or less, 100 nm or less, or 50 nm or less. Maintaining the size of the metal particle within the above ranges may help ensure that the battery characteristics, e.g., cycle-life characteristics of the all solid-state battery, may be improved.

In an implementation, the negative catalyst layer may include the carbon material and the metal particles, and a mixing ratio of the carbon material and the metal particles may be 1:1 to 99:1 by weight. In an implementation, an amount of the carbonaceous material may be, based on the metal particle, 1 or more, 2 or more, 3 or more, 4 or more, 5 or more, 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more or 95 or more, and 99 or less, 95 or less, 90 or less, 85 or less, 80 or less, 75 or less, 70 or less, 65 or less, 60 or less, 55 or less, 50 or less, 45 or less, 40 or less, 35 or less, 30 or less, 25 or less, 20 or less, 15 or less, 10 or less, 5 or less, 4 or less, 3 or less or 2 or less. In an implementation, the weight ratio of the carbon material and the metal particles may be 1:1 to 5:1, 1:1 to 10:1, 1:1 to 20:1, 1:1 to 25:1, 1:1 to 30:1, 1:1 to 40:1, 1:1 to 50:1, 1:1 to 60:1, 1:1 to 70:1, 1:1 to 80:1, or 1:1 to 90:1. Maintaining weight ratio of the carbon material and the metal particles within the ranges may help ensure that the electrical conductivity of the negative electrode may be further improved.

In an implementation, the negative electrode layer may include the negative electrode coating layer, and the current collector may include, e.g., indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

The negative electrode coating layer may further include a solid electrolyte, and the solid electrolyte may include the sulfide solid electrolyte previously described in the positive electrode. The solid electrolyte included in the negative electrode may be the same to or different from the solid electrolyte included in the positive electrode.

The negative electrode coating layer may further include, e.g., an additive, such as a filler, a dispersing agent, an ionic conductive material, or the like. The filler, the dispersing agent, the ionic conductive material included in the negative electrode coating layer may be suitable ones for the all solid-state battery.

The negative electrode coating layer may have a thickness, e.g., of 1 µm to 500 µm, 1 µm to 200 µm, 1 µm to 100 µm, or 1 µm to 50 µm.

In an implementation, the negative electrode layer may be a negative electrode active material layer.

The negative electrode active material layer includes a negative electrode active material, may include a binder, and may further include a conductive material.

The negative electrode active material may include lithium metal. In an implementation, the negative electrode active material includes may include the lithium metal, and it may include lithium metal itself, or may include a lithium alloy. The lithium alloy may be, e.g., a Li-Al alloy, a Li-Sn alloy, a Li-In alloy, a Li-Ag alloy, a Li-Au alloy, a Li-Zn alloy, a Li-Ge alloy, or a Li-Si alloy, or the like.

The negative electrode active material may include a material capable of reversibly intercalating/deintercalating lithium-ion, a lithium metal, an alloy of lithium metal, a material capable of doping and dedoping lithium, or a transition metal oxide.

The material capable of reversibly intercalating/deintercalating the lithium-ion may be a carbon negative electrode active material, e.g., crystalline carbon, amorphous carbon, or a combination thereof. The crystalline carbon may be graphite such as unspecified shape, sheet, flake, spherical or fiber shaped natural graphite or artificial graphite, and the amorphous carbon may be soft carbon, hard carbon, mesophase pitch carbide, sintered cokes, and the like.

Lithium, or a metal alloy thereof including, e.g., Na, K, Rb, Cs, Fr, Be, Mg, Ca, Sr, Si, Sb, Pb, In, Zn, Ba, Ra, Ge, Al, or Sn, may be used.

Examples of the material capable of doping and dedoping lithium may include a Si negative electrode active material or a Sn active material, and the Si negative electrode active material may include Si, Si-C composite, SiOₓ (0<x<2), Si-Q alloys (where Q is an alkali metal, alkali-earth metal, group 13 element, group 14 element, group 15 element, group 16 element, transition metal, rare earth element, or a combination thereof, but Q is not Si), and the Sn negative electrode active material may include Sn, SnO₂, and Sn-R (where R is an alkali metal, alkaline earth metal, group 13 element, group 14 element, group 15 element, group 16 element, transition metal, rare earth element, or combinations thereof, but R is not Sn), or the like, and at least one of these materials may be mixed with SiO₂. The elements Q and R may each independently be, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

The silicon-carbon composite may be a composite of silicon and amorphous carbon. The silicon-carbon composite may have an average particle diameter D₅₀ of, e.g., 0.5 µm to 20 µm. In an implementation, the Si-C composite may include silicon particles and an amorphous carbon coated on the surface of the silicon particles. In an implementation, the Si-C composite may include secondary particles (core) where silicon primary particles are agglomerated, and an amorphous carbon coating layer (shell) on the surface of the secondary particles. The amorphous carbon may be positioned between the silicon primary particles, e.g., so that the silicon primary particles may be coated with the amorphous carbon. The secondary particles may be dispersed in an amorphous carbon matrix.

The silicon-carbon composite may further include crystalline carbon. In an implementation, the silicon-carbon composite may include a core including crystalline carbon and silicon particles, and an amorphous carbon coating layer on the surface of the core. The crystalline carbon may be artificial graphite, natural graphite, or combination thereof. The amorphous carbon may be soft carbon, hard carbon, mesophase pitch carbide, sintered cokes, or the like.

In an implementation, the silicon-carbon composite may include silicon and amorphous carbon, and an amount of silicon may be 10 wt% to 50 wt% based on a total weight of the silicon-carbon composite and an amount of the amorphous carbon may be 50 wt% to 90 wt%. **In** an implementation, the composite may include silicon, amorphous carbon, and crystalline carbon, and, based on a total weight of the silicon-carbon composite, an amount of silicon may be 10 wt% to 50 wt%, an amount of the crystalline carbon may be 10 wt% to 70 wt%, and an amount of the amorphous carbon may be 20 wt% to 40 wt%.

The amorphous carbon coating layer may have a thickness of 5 nm to 100 nm. An average particle diameter (D₅₀) of the silicon particle (primary particle) may be 10 nm to 1 µm, or 10 nm to 200 nm. The silicon particle may be silicon itself, a silicon alloy, or an oxidized form. The oxidized silicon may be represented by SiOₓ (0<x<2). An atomic weight ratio of Si:O representing a degree of oxidation may be 99:1 to 33:67. As used herein, an average particle diameter D₅₀ indicates a diameter of particle where the cumulative volume corresponds to 50 volume% in the particle size distribution.

The Si negative electrode active material or the Sn negative electrode active material may be mixed with the carbon negative electrode active material to use. In an implementation, the Si negative electrode active material or the Sn negative electrode active material may be used together with the carbon active material, and a mixing ratio may be a weight ratio of 1:99 to 90:10.

In the negative electrode active material layer, an amount of the negative electrode active material may be 95 wt% to 99 wt% based on the total weight of the negative electrode active material layer.

In the negative electrode active material layer, an amount of the binder may be 1 wt% to 5 wt% based on the total weight of the negative electrode active material layer. In case of further including the conductive material, the negative electrode active material may be included at an amount of 90 wt% to 98 wt%, the binder may be included at an amount of 1 wt% to 5 wt%, and the conductive material may be included at an amount of 1 wt% to 5 wt%.

The binder may help improve binding properties of negative electrode active material particles with one another and with a current collector. The binder may be a non-aqueous-based binder, an aqueous-based binder, or combination thereof.

The non-aqueous binder may include a polyvinyl chloride, a carboxylated polyvinyl chloride, polyvinyl fluoride, an ethylene propylene copolymer, polystyrene, polyvinyl pyrrolidone, polyurethane, polytetrafluoroethylene, polyvinylidene fluoride, polyethylene, polypropylene, polyamide imide, polyimides, or combinations thereof.

The aqueous binder may include a styrene-butadiene rubber, an acrylated styrene-butadiene rubber, an acrylonitrile-butadiene rubber, an acrylic rubber, a butyl rubber, a fluorine rubber, polyethylene oxide, polyvinyl pyrrolidone, polyepichlorohydrin, polyphosphazene, polyacrylonitrile, an ethylene propylenediene copolymer, polyvinyl pyridine, chlorosulfonated polyethylene, latex, a polyester resin, an acrylic resin, a phenolic resin, an epoxy resin, polyvinyl alcohol, or combinations thereof.

In an implementation, the negative electrode active material layer may include a cellulose compound. The cellulose compound may include carboxymethyl cellulose, hydroxypropylmethyl cellulose, methyl cellulose, or alkali metal salts thereof. The alkali metal may be Na, K, or Li. The cellulose compound may serve as a binder and serve as a thickener to impart viscosity.

An amount of the cellulose compound may be, e.g., 0.1 parts by weight to 3 parts by weight based on 100 parts by weight of the negative electrode active material.

In an implementation, the negative electrode layer may be the negative electrode active material layer, and the current collector may include a copper foil, a nickel foil, a stainless steel foil, a titanium foil, a nickel foam, a copper foam, a polymer substrate coated with a conductive metal, or a combination thereof.

The all solid-state battery according to one or more embodiments may further include a buffer material, e.g., an elastic layer which serves to buffer changes in the thickness of the electrode during charging and discharging. The buffer material may be on the outermost surface of the electrode assembly of the positive electrode, the solid electrolyte layer, and the negative electrode, e.g., it may be between the negative electrode and the case. In case of stacking at least one electrode assembly, the buffer material may also be between the electrode assembly and another electrode assembly and/or on the outermost layer.

Considering that thickness of the negative electrode may be significantly changed due to a formation of dendrite, or the like during charge and discharge, the elastic sheet may be positioned on the outside of the negative electrode, e.g., on the opposite side of the surface where the solid electrolyte layer is in contact with the negative electrode, thereby serving as a buffer for solving the shortcomings due to the thickness changes. The elastic sheet may help prevent the deterioration caused by the reaction with lithium by being positioned on the outside of the positive electrode and/or the negative electrode, so that the coulombic efficiency of the battery may be also enhanced.

The buffer material may include materials having elasticity recovery rate of 50 % or more and insulating properties, e.g., silicon rubber, acrylic rubber, fluorine rubber, urethan, nylon, synthetic rubber, or combinations thereof. The buffer material may be a polymer sheet.

The all solid-state battery according to one or more embodiments may be fabricated by sequentially stacking the positive electrode, the solid electrolyte layer, and the negative electrode to prepare a laminate, adhering the elastic sheet to the outer surface of the positive electrode and/or the negative electrode, and pressurizing it. The pressurization may be carried out, e.g., at a temperature of 25 °C to 90 °C and under a pressure of 550 MPa or less, or 500 MPa or less, for example, 1 MPa to 500 MPa. The pressurization may be, e.g., isostatic press, roll press, or plate press.

The all solid-state battery may be a unit battery including a structure of the positive electrode/ the solid electrolyte layer/the negative electrode, a bicell including a structure of the positive electrode/the solid electrolyte layer/the negative electrode/the solid electrolyte layer/ the positive electrode, or a stacked battery where the unit batteries are repeated.

The shapes of the all solid-state battery may include, e.g., a coin-type, a button-type, a sheet-type, a laminate-type, a cylindrical-type, or a flat-type, or the like. The all solid-state battery may be applied to medium-to-large batteries used in electric vehicles. In an implementation, the all solid-state battery may be also used in hybrid vehicles such a plug-in hybrid electric vehicle (PHEV), or the like. It may be applied to an energy storage system (ESS) that requires large amounts of electric power, and it may be applied to electric bicycles or power tools.

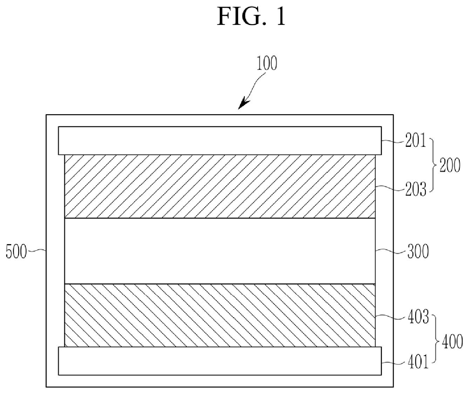

FIG. 1 schematically shows the all solid-state battery according to some embodiments and the solid-state secondary battery 100 may include a positive electrode 200 including a positive current collector 201 and a positive electrode active material layer 203, a negative electrode 400 including a negative electrode current collector 401 and a negative electrode coating layer 403, a solid electrolyte layer 300 between the positive electrode active material layer 203 and the negative electrode coating layer 403, and a battery case 500 in which these are housed.

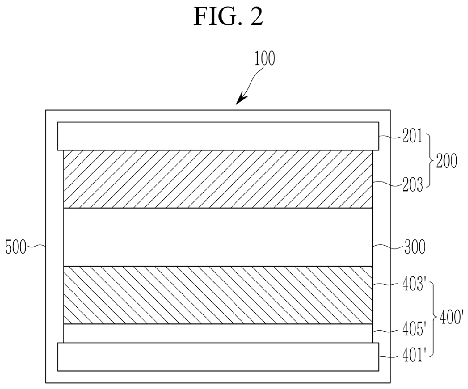

FIG. 2 is a schematic cross-sectional view of the all solid-state battery of one or more embodiments. The all solid-state secondary battery 100 shown in FIG. 2 may include a positive electrode 200 including a positive current collector 201 and a positive electrode active material layer 203, a negative electrode 400' including a negative current collector 401' and a negative coating layer 403', a solid electrolyte layer 300 between the positive electrode 200 and the negative electrode 400', and a battery case 500 in which these are housed. A lithium deposition layer 405' may be between the negative current collector 401' and the negative coating layer 403'. Such a lithium deposition layer 405' may be formed by releasing lithium ions from the positive electrode to deposit on the negative current collector 401' during charging.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Preparation of the solid electrolyte layer

A Li₆PS₅Cl argyrodite-based compound was mixed with zirconia. An amount of the zirconia was 0.07 wt%, based on a total weight of the argyrodite-based compound.

The resulting mixture was sintered at 510 °C for 12 hours.

The sintered product was pulverized at a rotation speed of 150 rpm for 3 hours. The obtained solid electrolyte was a Li₆PS₅Cl argyrodite solid electrolyte with an average particle diameter (D50) of 3.3 µm, and included 500.8 ppm of the Zr element.

To the prepared solid electrolyte, an isobutylyl isobutylate binder solution (solid amount: 50 wt%) to which butyl acrylate as an acrylate polymer was added, was added and then mixed. A mixing ratio of the solid electrolyte and the binder was a weight ratio of 98.7: 1.3.

The mixing process was carried out using a Thinky mixer. The mixture was added with a 2 mm zirconia ball and was repeatedly agitated using a Thinky mixer to prepare a slurry. The slurry was casted on a polytetrafluoroethylene release film and dried at ambient temperature to prepare a solid electrolyte layer with a thickness of 100 µm.

### (2) Preparation of negative electrode

92 wt% of carbon black and silver with an average particle diameter D50 of 30 nm, 3 wt% of Ag with an average size of 60 nm, 2 wt% of carboxymethyl cellulose, and 3 wt% of a styrene butadiene rubber were mixed in water to prepare a negative coating layer slurry.

The negative coating layer slurry was coated on a stainless steel foil current collector with a thickness of 10 µm and vacuum-dried at 80 °C to prepare a negative electrode with a thickness of 2 µm.

### (3) Preparation of positive electrode

85 wt% of a LiNi_{0.8}Co_{0.15}Mn_{0.05}O₂ positive electrode active material, 13.5 wt% of lithium argyrodite-type solid electrolyte Li₆PS₅Cl, 1.0 wt% of a polyvinylidene fluoride binder, and 0.5 wt% of a Ketjen black conductive material were mixed in an N-methyl pyrrolidone solvent to prepare a positive electrode composition.

The prepared positive electrode composition was coated on an aluminum positive current collector using a bar coater, dried, and pressed to prepare a positive electrode.

### (4) Fabrication of all solid-state cell

The prepared negative electrode, the solid electrolyte layer, and the positive electrode were sequentially stacked, the pressure was applied through a warm isostatic pressure (WIP) at 500 MPa to fabricate an all solid-state cell.

### (Example 2)

An all solid-state cell was fabricated by the same procedure as in Example 1, except that the amount of the zirconia was changed into 0.05 wt% based on the total weight of the argyrodite-based compound to prepare a Li₆PS₅Cl argyrodite solid electrolyte of which an average particle diameter (D50) was 3.2 µm, and included the Zr element in an amount of 350.8 ppm.

### (Example 3)

An all solid-state cell was fabricated by the same procedure as in Example 1, except that the amount of the zirconia was changed into 0.03 wt% based on the total weight of the argyrodite-based compound to prepare a Li₆PS₅Cl argyrodite solid electrolyte of which an average particle diameter (D50) was 3.5 µm and included the Zr element in an amount of 265.4 ppm.

### (Example 4)

An all solid-state cell was fabricated by the same procedure as in Example 1, except that the amount of the zirconia was changed into 0.01 wt% based on the total weight of the argyrodite-based compound and the pulverization was carried out at a rotating speed of 150 rpm for 6 hours to prepare a Li₆PS₅Cl argyrodite solid electrolyte of which an average particle diameter (D50) was 1.2 µm and included the Zr element in an amount of 121.5 ppm.

### (Example 5)

An all solid-state cell was fabricated by the same procedure as in Example 1, except that the amount of the zirconia was changed into 0.008 wt% based on the total weight of the argyrodite-based compound and the pulverization was carried out at a rotating speed of 150 rpm for 6 hours to prepare a Li₆PS₅Cl argyrodite solid electrolyte of which an average particle diameter (D50) was 1.5 µm and included the Zr element in an amount of 100 ppm.

### (Comparative Example 1)

An all solid-state cell was fabricated by the same procedure as in Example 1, except that the amount of the zirconia was changed into 0 wt% (e.g., zirconia was omitted) based on the total weight of the argyrodite-based compound to prepare a Li₆PS₅Cl argyrodite solid electrolyte of which an average particle diameter (D50) was 3.6 µm.

### (Comparative Example 2)

An all solid-state cell was fabricated by the same procedure as in Example 1, except that the amount of the zirconia was changed into 0.5 wt% based on the total weight of the argyrodite-based compound and the pulverization was carried out at a rotating speed of 150 rpm for 6 hours to prepare a Li₆PS₅Cl argyrodite solid electrolyte of which an average particle diameter (D50) was 1.3 µm and included the Zr element in an amount of 2,840.7 ppm.

### (Comparative Example 3)

An all solid-state cell was fabricated by the same procedure as in Example 1, except that the amount of the zirconia was changed into 1 wt% based on the total weight of the argyrodite-based compound to prepare a Li₆PS₅Cl argyrodite solid electrolyte of which an average particle diameter (D50) was 3.4 µm and included the Zr element in an amount of 5,420.3 ppm.

### Experimental Example 1: Evaluation of amount of Zr element

The amounts of the Zr element included in the solid electrolyte according to Examples 1 to 5 and Comparative Examples 1 to 3 were measured by using an XRF (X-ray fluorescence) equipment (Manufacturer: Bruker Korea Co., Ltd., Product name: S8 Tiger Series2). The results are shown in Table 1.

### Experimental Example 2: Evaluation of ionic conductivity

The ionic conductivity of the solid electrolyte according to Examples 1 to 5 and Comparative Examples 1 to 3 were measured. The results are shown in Table 1.

The ionic conductivity was measured by sampling the solid electrolyte into 10Φ (diameter: 10mm), while applying a torque of 10 Nm at ambient temperature (~25 °C), by using electric impedance spectroscopy measurement device. Herein, frequencies from 500 kHz to 50 mHz were scanned by using an amplitude of 50 mV at an open circuit potential.

**Table 1**

| | Amount of used Zr (wt%) | Pulverizati on speed (rpm) | Pulverizati on time (hout) | Solid electrolyte average particle diameter (D50, µm) | Amount of Zr element included in solid electrolyte (ppm) | Ionic conductivity (mS/cm) |
|---|---|---|---|---|---|---|
| Example 1 | 0.07 | 150 | 3 | 3.3 | 500.8 | 3.5 |
| Example 2 | 0.05 | 150 | 3 | 3.2 | 350.8 | 2.8 |
| Example 3 | 0.03 | 150 | 3 | 3.5 | 265.4 | 2.1 |
| Example 4 | 0.01 | 150 | 6 | 1.2 | 121.5 | 1.8 |
| Example 5 | 0.008 | 150 | 6 | 1.5 | 100 | 2 |
| Comparative Example 1 | 0 | 150 | 3 | 3.0 | 5.8 | 1.9 |
| Comparative Example 2 | 0.5 | 150 | 6 | 1.3 | 2,840.7 | 1.3 |
| Comparative Example 3 | 1 | 150 | 3 | 3.4 | 5,420.3 | 1.9 |

In Table 1, the amount of Zr included in the solid electrolyte of Comparative Example 1 was an amount included as an impurity.

It is appropriate to compare ionic conductivity between solid electrolytes with similar particle sizes. Thus, when comparing Examples 1 to 3 and Comparative Examples 1 and 3, which have similar particle sizes, it may be seen that the ionic conductivity of Examples 1 to 3 was superior to that of Comparative Examples 1 and 3.

When comparing Examples 4 and 5, and Comparative Example 2, the ionic conductivity of Example 4 was superior to that of Comparative Example 2.

While this invention has been described in connection with what is presently considered to be practical example embodiments, it is to be understood that the invention is not limited to the disclosed embodiments, and on the contrary, it is intended to cover various modifications and equivalent arrangements included within the spirit and scope of the appended claims.

## Claims

1. A solid electrolyte for an all solid-state battery, the solid electrolyte comprising:
a Zr element in an amount of 100 ppm to 1,000 ppm; and
an argyrodite-based compound.

2. The solid electrolyte for an all solid-state battery as claimed in claim 1, wherein the argyrodite-based compound is represented by Chemical Formula 1,
[Chemical Formula 1] LiₐM_{b}S_{c}P_{d}Xₑ
(in Chemical Formula 1,
a, b, c, d, and e are each independently 0 or more and 12 or less,
M is Ge, Sn, Si, Ag, Cu, or a combination thereof, and
X is F, Cl, Br, or I.)

3. The solid electrolyte for an all solid-state battery as claimed in claim 1, wherein the Zr element is comprised in the form of a Zr metal, a Zr alloy, Li₂O-ZrO₂, Li₂ZrO₃, or a combination thereof.

4. The solid electrolyte for an all solid-state battery as claimed in claim 1, wherein the amount of the Zr element is 100 ppm to 700 ppm.

5. The solid electrolyte for an all solid-state battery as claimed in claim 2, wherein a is 4 to 8.

6. The solid electrolyte for an all solid-state battery as claimed in claim 2, wherein b is 0 to 0.5.

7. The solid electrolyte for an all solid-state battery as claimed in claim 2, wherein c is 4 to 6.

8. The solid electrolyte for an all solid-state battery as claimed in claim 2, wherein d is 0.1 to 2.

9. The solid electrolyte for an all solid-state battery as claimed in claim 2, wherein e is 0.1 to 2.

10. The solid electrolyte for an all solid-state battery as claimed in claim 2, wherein the M is Cu, Sn, or a combination thereof.

11. The solid electrolyte for an all solid-state battery as claimed in claim 2, wherein X is Cl, Br, or a combination thereof.

12. The solid electrolyte for an all solid-state battery as claimed in claim 1, wherein the argyrodite-based compound includes Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof.

13. The solid electrolyte for an all solid-state battery as claimed in claim 1, wherein the solid electrolyte has an ionic conductivity of 1 mS/cm to 10 mS/cm at a room temperature.

14. The solid electrolyte for an all solid-state battery as claimed in claim 1, wherein the average particle diameter (D50) is 0.5 µm to 5 µm.

15. An all solid-state battery, comprising:
a negative electrode;
a positive electrode; and
a solid electrolyte layer between the positive electrode and the negative electrode, the solid electrolyte layer including the solid electrolyte of any of claim 1 to claim 14.

16. The all solid-state battery as claimed in claim 15, wherein the negative electrode includes a metal and a carbon material.

17. The all solid-state battery as claimed in claim 16, wherein the metal includes Ag, Zn, Al, Sn, Mg, Ge, Cu, In, Ni, Bi, Au, Si, Pt, Pd, or a combination thereof.

18. The all solid-state battery as claimed in claim 16, wherein the carbon material includes crystalline carbon, amorphous carbon, or a combination thereof.
